# EUROPEAN PATENT APPLICATION

(11) **EP 1 112 679 A2**
(43) Date of publication of application: **04.07.2001**
(21) Application number: 00128310.0
(22) Date of filing: 22.12.2000
(51) Int. Cl.: A01G 17/02

(54) **Apparatus to treat plantations in rows**

(30) Priority: 30.12.1999 IT UD990222
(71) Applicant: Ciani, Claudio, 33010 Pagnacco (UD) (IT)
(72) Inventor: Ciani, Claudio, 33010 Pagnacco (UD) (IT); Bonanni, Roberto, 33100 Udine (IT)
(74) Representative: Petraz, Gilberto Luigi

(57) **Abstract**

Apparatus to treat plantations (11) in rows (12) of plants (15), comprising guide means (16) which extend substantially for the whole length of the rows (12), at least a trolley (20,30,130) able to move along said guide means (16) and at least a treatment device mounted on board the trolley (20, 30, 130).

## Description

### FIELD OF THE INVENTION

The invention is applied in the field of agriculture and consists of an apparatus able to automate the treatment of plants grown in rows.

Hereafter, the term treatment is to be intended as any kind of processing whatsoever, able to encourage the development and ensure the maintenance of the plants, such as for example: spraying, pruning, leaf stripping, tying, irrigation, fertilizing, harvesting and/or transporting the fruit, or otherwise.

### BACKGROUND OF THE INVENTION

At present, to treat plants grown in rows, for example to spray them with anti-cryptogamic substances, specific equipment is used, self-propelled or drawn by tractors, which are made to pass along the passages defined between the parallel rows.

Consequently the rows necessarily have to be separated from each other by a value correlated to the width of said equipment so as to allow them to pass easily and prevent damage to the plants.

Moreover, conventional equipment used to treat the plants is very heavy and, therefore, the wheels or tracks thereof necessarily trample and compact the soil which, in some cases, can compromise the physical structure of the terrain with consequent damage to the crops and a deterioration in the quality of the goods obtained.

Furthermore, the equipment is difficult to use, especially in impassable zones, for example in the hills or mountains, where moving them may even be potentially dangerous for the workers.

Moreover, it is unreasonable to do the treatment manually in such zones and/or in the case of intensively cultivated crops, both for reasons concerning the safety of the workers, for example the danger of breathing in toxic substances in spraying treatments, and also for problems of physical fatigue, and for the long operating times needed.

The results obtained with conventional equipment, moreover, depend on the ability, experience and conditions of the worker, so it is very difficult to ensure that the treatments are performed uniformly and can be repeated thus.

Using conventional equipment, moreover, is only possible when the atmospheric conditions, the conditions of the terrain and of the light are favourable and therefore, at present, it is substantially impossible to actuate a systematic programming of the treatment cycles.

The present Applicant has devised and embodied this invention to overcome these shortcomings and to obtain further advantages.

### SUMMARY OF THE INVENTION

The invention is set forth and characterized in the main claim, while the dependent claims describe other innovative characteristics of the invention.

One purpose of the invention is to provide an apparatus able to automate any treatment able to favour the development and to ensure the maintenance of plants grown in rows, so as to reduce the operating times and the number of workers needed, and also the risks and fatigue for the workers.

Another purpose of the invention is to allow the treatments to be performed easily even in rough terrain, for example in the hills or mountains, which are difficult to reach with the conventional machines and equipment which are used to perform the treatments.

A further purpose of the invention is to eliminate the problems caused by such conventional machines and equipment such as, for example, compacting the soil and damaging the plants.

Yet another purpose is to provide an apparatus able to ensure that the treatments performed are uniform and can be repeated, making them independent of the ability of the worker, the atmospheric conditions, the conditions of the light and the ground. This allows both to improve the quality of the products obtained from the plantations using the apparatus according to the invention, and also to actuate a systematic programming of the treatments which are to be performed.

The invention also allows to increase the productivity of the plantations and to reduce the times needed for the treatments, since it is able to perform simultaneously even two or more different types of treatment, such as for example pruning and spraying with plant health substances.

It is also a purpose of the invention to reduce the risks for the workers by supplying an apparatus able to perform, substantially autonomously, any type of treatment so as to prevent, for example, poisoning due to breathing in harmful substances and accidents due to the accidental overturning of conventional operating machines, which is very frequent in rough terrain.

In the case of spraying treatments, it is also a purpose of the invention to improve the distribution of the products used and to reduce their dispersion into the atmosphere.

A further purpose of the invention is to reinforce the structure which supports the plants, usually consisting of poles and wires, and consequently to allow to reduce the maintenance which is needed at present in order to restore and align the poles.

In accordance with these purposes, an apparatus according to the invention to treat a plantation comprising at least one row of plants comprises guide means which extend substantially for the whole length of the row, at least a trolley able to move along said guide means, and at least a treatment device mounted on board the trolley and able to perform any type of processing able to encourage the development and maintenance of the plants, such as spraying, irrigation, pruning, leaf stripping, tying, fertilization, harvesting and/or the transport of the fruit, or otherwise.

In one embodiment of the invention the guide means are coupled to the poles, or props, supporting the plants while, according to a variant, the guide means are supported by autonomous supporting elements or rest directly on the ground.

In the first case, the guide means also function as a reinforcement for the whole supporting structure of the plants, thus avoiding maintenance and preventing modifications to the supporting structure due to partial subsidence in the ground.

In one formulation of the invention, the guide means are able to define a single preferential path for the whole extension of the plantation; in this case there are connection segments which allow the trolley to pass from one row to the next. According to a variant, the preferential path is closed.

In a first formulation of the invention, the trolley is able to be drawn in two directions along the guide means by a movement device outside said guide means while in another embodiment, the trolley is self-propelled.

In one constructional embodiment, the movement device comprises first flexible drawing means coupled with a first end of the trolley, second flexible drawing means coupled with a second end of the trolley and winding means able to selectively pull the first flexible drawing means or the second flexible drawing means to cause the trolley to be selectively moved in the two directions.

According to the invention, different types of winding means can be used, such as for example pulleys, reels or otherwise. According to the type of winding means used, it is possible to use also containers or similar able to collect the flexible drawing means without risk of tangles or damage.

In the event that the treatment to be performed provides the emission of a fluid, whether it be a liquid, an aeriform substance or a mixture of a liquid and an aeriform substance, at least one of the two flexible drawing means consists of the flexible tube used to feed the fluid to the distribution means provided on the trolley, while the other flexible drawing means can consist of a cable.

In the case of a self-propelled trolley driven by an electric motor, on the contrary, at least one of the two flexible drawing means comprises an electric wire able to supply electric energy to the motor or to other electric devices mounted on board the trolley.

According to a variant, the trolley comprises two or more modules, which can be selectively coupled together, each of which is able to perform, even simultaneously, a specific function and/or treatment so as to optimize the process and the results and reduce the time taken.

### BRIEF DESCRIPTION OF THE DRAWINGS

These and other characteristics of the invention will become clear from the following description of some preferential forms of embodiment, given as a non-restrictive example, with reference to the attached drawings wherein:
- Fig. 1: is a side view of a first embodiment of an apparatus according to the invention to treat plantations in rows;
- Fig. 2: is a side view of another embodiment of an apparatus according to the invention;
- Fig. 3: shows an enlarged detail of Fig. 1;
- Fig. 4: is a part view of the detail shown in Fig. 3;
- Figs. 5-6: show two different views of the enlarged detail A of Fig. 3;
- Fig. 7: shows an enlarged detail of Fig. 2;
- Fig. 8: is a front view of the detail B of Fig. 7;
- Fig. 9: is a part view of a variant of Fig. 3;
- Figs. 10-11: show respectively a view from above and a front view of Fig. 9;
- Fig. 12: shows a variant of Fig. 7;
- Figs. 13-14: are front views respectively of the detail C and the detail D of Fig. 12;
- Fig. 15: is a plane view of a plantation in rows to which the apparatus according to the invention is applied.

### DETAILED DESCRIPTION OF PREFERRED EMBODIMENTS

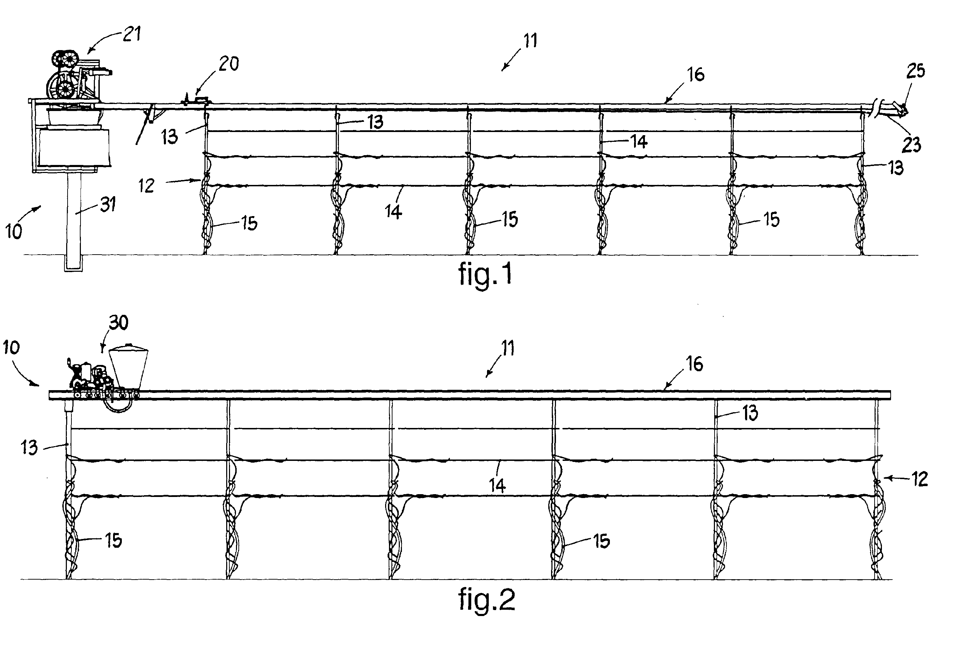

Figs. 1 and 2 show two different embodiments of an apparatus 10 to treat a plantation 11, comprising a plurality of aligned and parallel rows 12. Each row 12 comprises a plurality of supporting poles or props 13 between which the wires 14 able to support the plants 15 are stretched.

Both the apparatus in Fig. 1 and the apparatus in Fig. 2 are used to spray chemical, for example anti-cryptogamic substances, and have in common a guide 16 able to define a preferential path for different types of trolley, as will be described later in more detail; each trolley is able to perform a specific treatment on the plants 15.

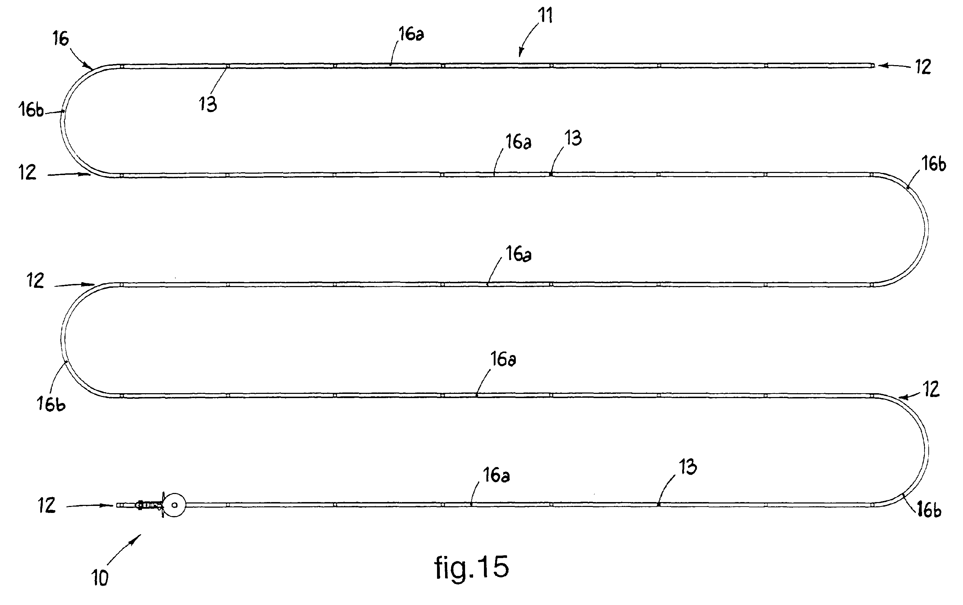

In the embodiment shown in Fig. 15, the guide 16 is able to cover the entire length of the vineyard 11 and consists of rectilinear segments 16a, coupled to the upper end of the poles 13, and curved segments 16b, able to connect each pair of adjacent rectilinear segments 16a.

In the apparatus 10 shown in Fig. 1, the guide 16 has a C-shaped transverse section open upwards and is able to guide a trolley 20 equipped with an assembly of shaped tubes 18 provided with adjustable delivery nozzles 19.

According to a variant, not shown here, the delivery nozzles 19 cooperate with screens or similar, arranged in such a manner so as to prevent the substance sprayed on the plants from spreading into the surrounding environment; the screens can also be equipped with containers able to contain the substance sprayed, which otherwise would be dispersed, so as to allow it to be subsequently recovered.

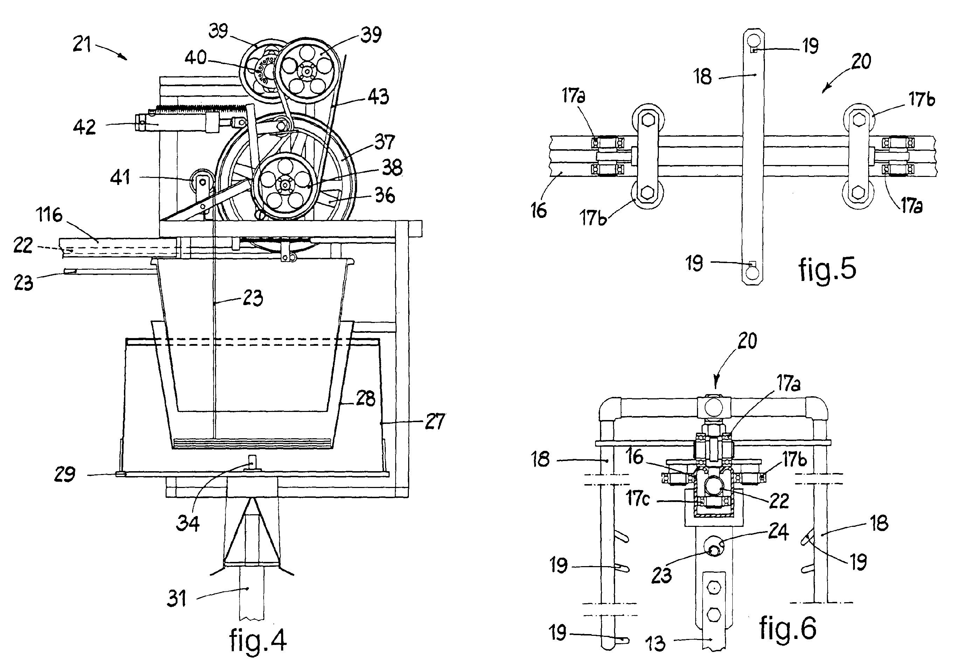

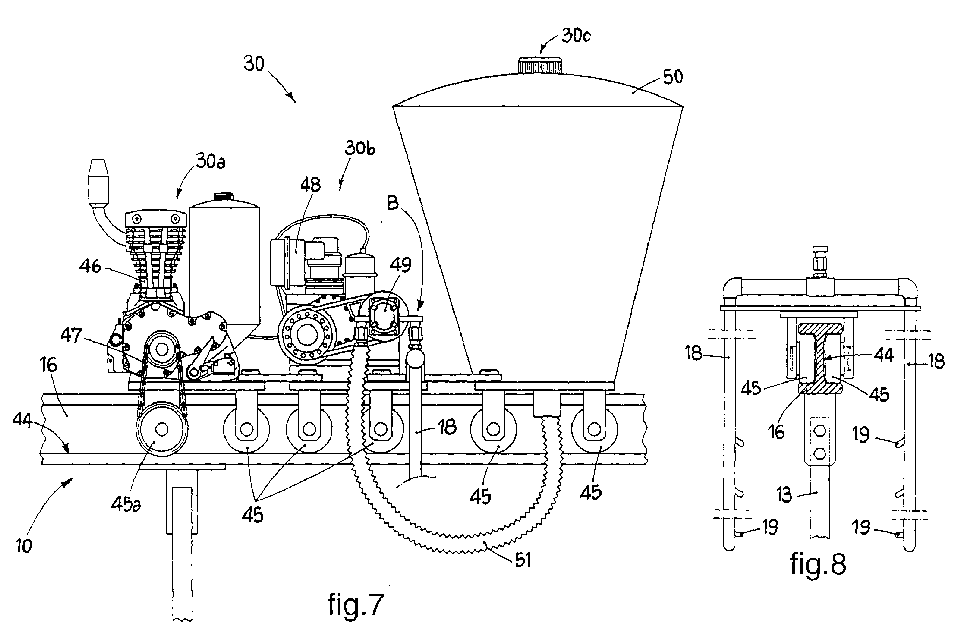

The trolley 20, as shown in detail in Figs. 5 and 6, is coupled in sliding fashion with the guide 16 by means of four radial bearings 17a with a horizontal axis of rotation and by four radial bearings 17b and two radial bearings 17c with a vertical axis of rotation; the bearings 17a and 17b are able to rest and slide respectively on the upper part and on the outer lateral part of the "C" defined by the guide 16 whereas the bearings 17c are able to slide inside the "C".

This arrangement of the bearings 17a-17c confers on the trolley 20 a great stability even when a guide 16 is used with a very limited transverse section.

A flexible tube 22 is coupled with the rear end of the trolley 20 and is able to feed the substance which is to be sprayed to the assembly of shaped tubes 18 and to slide inside the "C" defined by the guide 16; a cable 23 is coupled with the front end and is able to slide partly inside the guide 16 and partly below it, inside eyelets 24 (Fig. 6).

It is obvious that the flexible tube 22 can be used also to feed an aeriform fluid, for example compressed air.

The compressed air supplied to the trolley 20 can be blown, at the desired pressure, onto the plants 15, for example to encourage the fruit to dry before it is picked, or it can be used to command pneumatic tools, for example shears, mounted on board the trolley 20.

It is also obvious that the flexible tube 22, or the cable 23, can be replaced or integrated by electric wires able to supply electric energy to the trolley 20 to command movement members, for example an electric motor, which allow to move it along the guide 16, or electric tools or equipment, for example electric saws or pruning devices, mounted on board the trolley 20 and able to perform a specific treatment or even transmit and receive electric signals.

In the preferential embodiment, the flexible tube 22 is covered with a protective sheath which facilitates the sliding thereof and prevents wear.

At the terminal end of the guide 16, the cable 23 is returned towards the opposite end, where there is a device 21 to move the trolley 20, by means of a pulley 25 equipped with idle movement.

The movement device 21 is able to selectively pull towards itself either the flexible tube 22 or the cable 23 so as to selectively move the trolley 20 in two directions along the guide 16. To be more exact, when the device 21 pulls the cable 23, the trolley 20 is distanced from the device 21 whereas, when the device 21 pulls the flexible tube 22, the trolley 20 approaches.

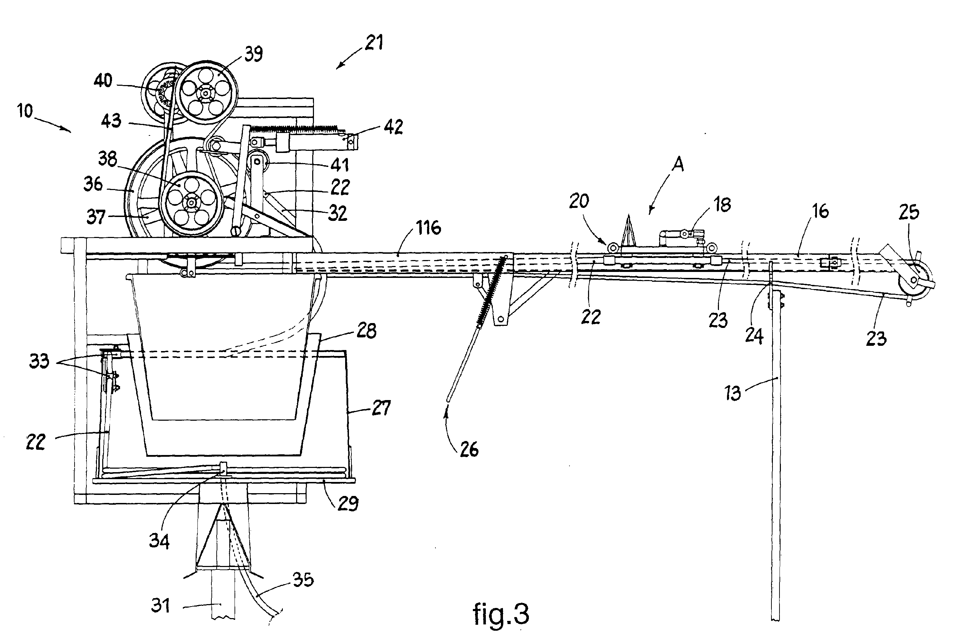

In the embodiment shown here, the device 21 is coupled with the guide 16 by means of a segment of guide 116 equipped at the end with a rapid coupling assembly (26) (Fig. 3), which allows to remove the device 21 from the plantation 11 when not in use.

The movement device 21 is equipped with a lower container 27 and an upper container 28, coaxial with each other, in which respectively the flexible tube 22 and the cable 23 are able to be collected. The upper container 28 is fixed while the lower container 27 is coupled in rotary fashion with a supporting upright 31 by means of a flange 29.

In the embodiment shown, the container 27 is able to rotate selectively in both directions, moved passively by the winding and unwinding of the flexible tube 22.

According to a variant, not shown here, the cable 23 is collected on the ground, instead of inside the upper container 28, or in a container autonomous with respect to the movement device 21.

The lower container 27 is able to cooperate with an arched tubular element 32 and with a series of pulleys 33, the function of which is to guide the tube 22 and encourage it to be wound into coils.

The end of the flexible tube 22 opposite that coupled with the assembly of shaped tubes 18 of the trolley 20 is coupled with a revolving connection 34 solid with the flange 29. The inlet of the revolving connection 34 is coupled with a flexible tube 35 connected to an assembly to feed the fluid to be sprayed, for example comprising a tank and a pump, substantially of a conventional type and therefore not shown in the drawings.

The flexible tube 22 and the cable 23 are able to wind onto a substantial part of the circumference of a respective pulley 36 and 37. The pulleys 36 and 37 are counter-rotating and cooperate with pressure wheels 41 able to ensure that the flexible tube 22 adheres constantly to the surface of the throat of the pulley 36 and that the cable 23 adheres constantly to the surface of the throat of the pulley 37.

In this way, with reference to Fig. 3, while the pulley 37 rotates in a clockwise direction and pulls the cable 23 towards it, the pulley 36 rotates in an anti-clockwise direction and releases the flexible tube 22; thus, the trolley 20 advances along the guide 16.

On the contrary, when the pulley 36 rotates in a clockwise direction and pulls the flexible tube 22 towards it, the pulley 37 rotates in an anti-clockwise direction and releases the cable 23; thus the trolley 20 retreats back along the guide 16.

In the embodiment shown here, each pulley 36 and 37 receives motion from a lower pulley 38 connected by means of transmission belts 43 to an upper pulley 39 keyed onto the shaft of an oleo-dynamic motor 40. The correct tensioning of the transmission belts 43 is ensured by a substantially conventional oil-dynamic tensioner 42.

The oil-dynamic plant and everything else necessary for the functioning of the two oil-dynamic motors 40 is substantially conventional and therefore is not shown in the drawings.

Instead of the trolley 20 and the movement device 21, the apparatus 10 shown in Fig. 2 comprises a self-propelled trolley 30 which is also equipped to spray the plants 15. In this form of embodiment, the guide 16 has a substantially I-shaped transverse section (Fig. 7) defining laterally two grooves 44 inside which mating wheels 45, with a horizontal axis of rotation, are able to be inserted and slide.

As shown in Fig. 7, the trolley 30 consists of three modules, 30a-30c, each equipped with four wheels 45 and serially connected. The first module 30a has a drive function and is equipped with an internal combustion motor 46 able to transmit motion, by means of a chain 47, to a pair of drive wheels 45a. The second module 30b is equipped with an internal combustion motor 48 connected with a pump 49 which, in turn, is connected with an assembly of shaped tubes 18 similar to that installed on the trolley 20 (Fig. 8). The third module 30c is equipped with a tank 50 able to contain the substance to be sprayed on the plants 15, connected by means of a corrugated tube 51 to the inlet of the pump 49.

According to two variants, not shown here, the motor 46 and/or the motor 48 is not internal combustion but electric or pneumatic. In the first case, the electric energy can be supplied by an autonomous feed source installed on board the trolley 30 or by means of an electric wire. The electric wire can be used also in the embodiment shown in Figs. 1, 5, 6 to feed any possible electric machines on board the trolley 20. In the case of pneumatic motors, on the contrary, the compressed air is supplied by means of the flexible tube 22.

Compressed air can also be used to improve the nebulization of the substance contained in the tank 50 and/or to dry the plants 15.

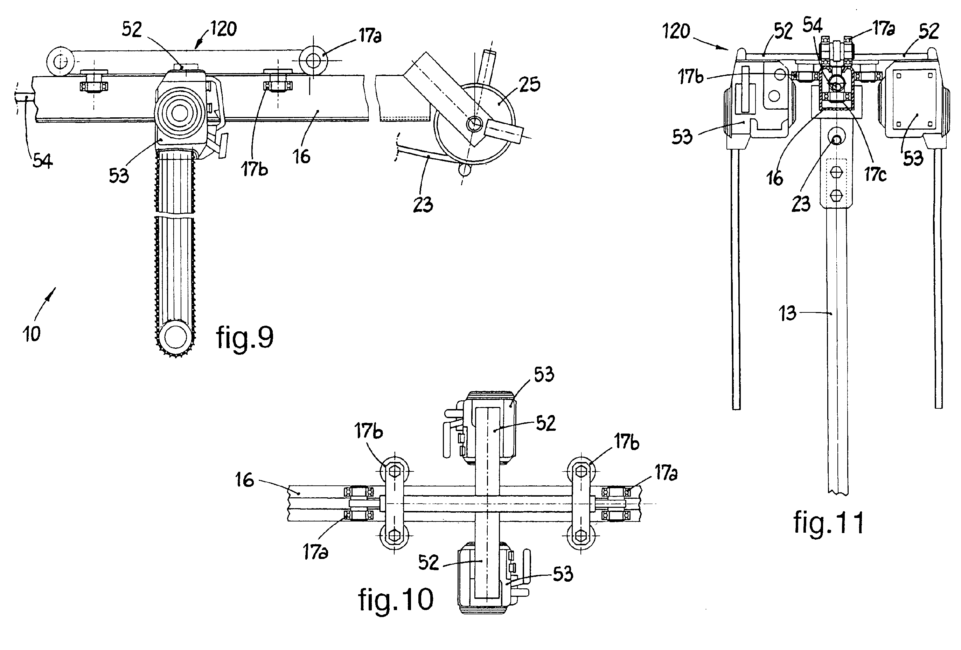

Figs. 9-11 show a variant of Fig. 1, used to prune the plants grown in rows 12 wherein instead of the trolley 20 there is a trolley 120 equipped with two arms 52 protruding towards the outside, each one able to support a respective electric saw 53. In this case too, the movement of the trolley 120 is entrusted to the device 21 which, instead of the flexible tube 22, uses a cable 54. According to a variant, not shown, the arms 52 are of the adjustable and/or directable type.

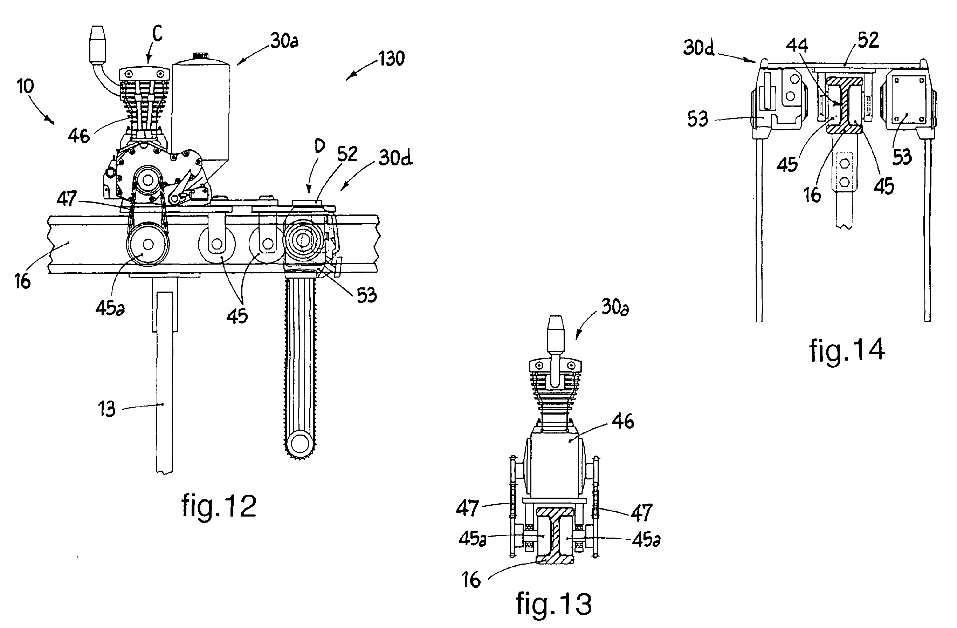

Figs. 12-14 show a variant of Fig. 7 wherein the trolley 130 comprises a module 30a serially connected to a module 30d, also equipped with its own wheels 45, provided with arms 52 to support electric saws 53.

It is obvious that modifications or additions can be made to the invention without departing from the spirit and scope thereof. For example, the guides 16 can be of any other transverse section and the trolleys 20, 30 and 130 can also be associated to the guides 16 by means of sliders, pads or other sliding elements. The guides 16 can also be supported by autonomous poles, possibly adjustable in height according to the type of plants grown, or can rest on the ground and possibly define a closed path. The oil-dynamic motors 40 can be replaced by any other type of motor, for example electric, pneumatic or otherwise, chosen according to the specific application.

It is also obvious that the trolleys 20, 30, 130 can be moved step-wise by using sensors able to identify the position of the individual poles 13, the plants 15 or the other reference points. A TV camera or other monitoring system may also be provided, which will allow to determine the exact position of the individual plants 15 in order to perform specific treatments and prevent useless waste of materials and energy.

It is also obvious that the trolleys 20, 30, 130 can also be equipped with other treatment means, such as for example, devices for pruning, leaf-stripping, tying, fertilizing, irrigation, spraying with high pressure liquid or with liquid and compressed air, devices to pick the fruit and to transport the picked fruit.

Moreover, the self-propelled trolleys 30 and 130 can be remote controlled by means of radio commands or similar devices able to communicate with a command assembly mounted on board the self-propelled trolleys 30, 130, which can even be fed with photovoltaic panels. The photovoltaic panels can also be used, in cooperation with batteries of accumulators, to feed the electric motors used instead of the internal combustion motors 46 and 48. The trolleys 20, 30, 130 can also be equipped with safety devices able to stop them when there are obstacles or dangers for the workers. The flexible tube 22 and the cables 23 and 54 can be collected in coils on respective winding reels instead of in the containers 26 and 27. Moreover, although the description refers to a specific example, a skilled person shall certainly be able to achieve many other equivalent forms of apparatus to treat plantations in rows, all of which shall come within the field and scope of this invention.

## Claims

1. Apparatus to treat a plantation (11) comprising at least a row (12) of plants (15), said treatment comprising any processing able to encourage the development and maintenance of said plants (15) such as spraying, pruning, leaf-stripping, tying, irrigation, fertilization, harvesting and/or transport of the fruit or otherwise, the apparatus being characterized in that it comprises guide means (16) which extend substantially for the whole length of said row (12), at least a trolley (20,30,130) able to move along said guide means (16) and at least a treatment device mounted on board said trolley (20,30,130) and able to perform at least one of said processes on said plants (15).

2. Apparatus as in Claim 1, wherein said row (12) comprises a plurality of supporting poles or props (13) for said plants (15), characterized in that said guide means (16) are coupled to said supporting poles or props (13).

3. Apparatus as in Claim 2, characterized in that said guide means (16) are coupled to the upper end of said supporting poles or props (13).

4. Apparatus as in Claim 1, characterized in that said trolley (20) is able to be drawn in two directions along said guide means (16) by a movement device (21) associated with a first end of said guide means (16).

5. Apparatus as in Claim 4, characterized in that said movement device (21) comprises first flexible drawing means (22) coupled with a first end of said trolley (20) and second flexible drawing means (23) coupled with a second end of said trolley (20), said second flexible drawing means (23) being returned towards said movement device (21) by return means (25) provided at a second end of said guide means (16), winding means being provided to selectively draw said first flexible drawing means (23) or said second flexible drawing means (23) towards said movement device (21) in order to determine the selective movement in two directions of said trolley (20).

6. Apparatus as in Claim 5, characterized in that, for each of said flexible drawing means (22,23,54), said winding means comprise a pulley (36,37) around which the corresponding flexible drawing means (22,23,54) is able to wind for a defined segment of the circumference of said pulley (36,37) to be drawn and collected in corresponding collection means (27,28).

7. Apparatus as in Claim 6, characterized in that there is a first pulley (36) provided for said first flexible drawing means (22, 54) and a second pulley (37) provided for said second flexible drawing means (23), said first (36) and said second (37) pulley being able to be selectively activated.

8. Apparatus as in Claim 6, characterized in that, in correspondence with said winding segment, thrust means (41) are provided able to thrust said flexible drawing means (22,23,54) inside the circumferential throat of said pulley (36,37) to ensure that said flexible drawing means (22,23,54) adhere constantly to said throat.

9. Apparatus as in Claim 6, characterized in that said collection means (27) are able to rotate around their own axis in correlation to the rotation of said pulley (36) so that said flexible drawing means (22) are collected in coils inside said collection means (27).

10. Apparatus as in Claim 9, characterized in that said collection means (27) cooperate with guide means (32,33) able to encourage the formation of said coils.

11. Apparatus as in Claim 5, characterized in that said winding means comprise a reel onto which said flexible drawing means (22,23,54) are able to wind in coils.

12. Apparatus as in Claim 1, characterized in that said trolley (30,130) is self-propelled.

13. Apparatus as in Claim 12, characterized in that said trolley (30,130) is provided with motor means (46) connected to drive wheels (45a) able to rest and grip on said guide means (16).

14. Apparatus as in Claim 12, characterized in that said trolley (30, 130) comprises two or more modules (30a,30b,30c,30d) each able to perform a specific function and/or treatment on said plants (15).

15. Apparatus as in Claim 1, used in a plantation (11) comprising a plurality of parallel rows (12), characterized in that said guide means (16) comprise first segments (16a) each associated with a respective row (12) and second segments (16b) able to connect two adjacent rectilinear segments (16a) in order to define a single preferential path for said trolley (20,30,130).

16. Apparatus as in Claim 15, characterized in that said preferential path is closed.

17. Apparatus as in Claim 1, wherein said treatment consists of emitting a fluid, either a liquid, an aeriform substance or a mixture of a liquid with an aeriform substance, onto said plants (15), characterized in that said trolley (20,30) is equipped with an assembly of shaped tubes (18) provided with delivery nozzles (19).

18. Apparatus as in Claims 5 and 17, characterized in that said first flexible drawing means (22) consist of a tube connected at a first end to said assembly of shaped tubes (18) and at the opposite end to an assembly to feed said fluid, said movement device (21) being provided between said first and second end.

19. Apparatus as in Claim 1, wherein said treatment comprises the pruning of said plants (15), characterized in that said trolley (30,130) is equipped with arms (52) able to support driven shearing means (53) facing towards said plants (15).

20. Apparatus as in Claims 5 and 19, characterized in that said first flexible drawing means (54) and said second flexible drawing means (23) consist of a respective cable.

21. Apparatus as in Claim 5, characterized in that said first flexible drawing means (54) and/or said second flexible drawing means (23) consist of an electric wire.

22. Apparatus as in Claim 1, characterized in that it comprises monitoring means able to identify the position of pre-determined physical reference points.

23. Apparatus as in Claim 1, characterized in that said monitoring means comprise a TV camera.

24. Apparatus as in Claim 1, characterized in that it is governed by an automatic control assembly.
